# EUROPEAN PATENT APPLICATION

(11) **EP 4 807 432 A1**
(43) Date of publication of application: **16.09.2026**
(21) Application number: 25163472.1
(22) Date of filing: 13.03.2025
(51) Int. Cl.: G02B 27/09, G03B 21/20

(54) **COMPACT LASER BEAM HOMOGENIZER**

(71) Applicant: Laserworld AG, 8574 Lengwil (CH)
(72) Inventor: Luque, Jordi, 83626 Valley (DE)
(74) Representative: Mzb PartmbB

(57) **Abstract**

The invention relates to a compact and cost-efficient laser beam homogenizer apparatus (10) for high power lighting entertainment applications of at least 100 W rated input power comprising a light source (12), a light pipe (28) for receiving and homogenizing light from the light source (12), and a focusing lens (24) for coupling light into the light pipe (28), wherein the length (L) of the light pipe (28) is at least 10, preferably at least 25, times its aperture (A) .

## Description

### Technical Field

This invention belongs to the field of laser beam shaping for high power lighting entertainment applications.

### Background Art

Most laser types in use today have an output beam profile with circular or elliptical cross sections, with either a Gaussian or near-Gaussian intensity profile distribution. This is acceptable and often advantageous for many applications where the laser beam is focused to a small spot. However, there are also many different applications where a uniform, even intensity distribution ("top hat") is required. For example, in entertainment applications, if the laser light is used for illumination, uniform illumination creates identical features that all appear to have the same brightness regardless of where they are in the illuminated field, simplifying the image processing task and increasing contrast and resolution.

There are several techniques and methods to achieve a uniform distribution pattern. Low-cost laser-based devices often use Gaussian beam sources that can be physically cut by an aperture to form a pseudo-flat top profile.

This is inefficient and there is a significant waste of energy in the outer regions of the Gaussian profile, but this engineering approach helps to minimize the complexity and overall cost of the devices.

Entertainment applications, for example long range laser shows, often require high-power laser beams, for example, having an optical power of at least 20 W or a rated input power of 100 W or more.

To reduce inefficiencies and losses of optical output power, higher performance applications with higher efficiency requirements often use different types of refractive beam shapers.

EP 4286919 B1 discloses a multi-wavelength laser beam homogenizer-expander light engine. To achieve a good homogenization, the light engine uses a multitude of optical elements, in particular a first beam shaper element to divide incident beams into beamlets along the main optical axis, and a second beam shaper element which defines a top-hat intensity distribution output, thus providing a second homogenization stage.

### Technical Problem

Such solutions may provide uniform, even intensity distributions, but require complex large and costly optical arrangements.

Therefore, it is an object of the invention to provide a compact laser beam homogenizer apparatus for high power lighting entertainment applications. The apparatus should be highly efficient. Overall costs of the apparatus should preferably be low. It should be applicable to a large variety of entertainment applications and preferably have a long lifetime.

### Solution to the Problem

As shall be further elucidated in the following description, this problem is solved by a laser beam homogenizer apparatus for high power lighting entertainment applications of at least 100 W rated input power comprising a light source, a light pipe for receiving and homogenizing light from the light source, and a focusing lens for coupling the light into the light pipe. The length of the light pipe is at least 10 times its aperture. Preferably, the length of the light pipe is at least 25 times its aperture.

### Advantageous Effects of the Invention

The invention is based on a light pipe as primary homogenizing element. Through the process of total internal reflection (TIR), a light pipe can transform an output of a highly non-uniform light source into a highly uniform or homogenized illumination. It can be used with coherent laser sources as well as other incoherent light sources. The invention is capable to provide a nearly uniform, even intensity distribution, also called a "top hat" intensity distribution.

It is one goal of the invention to provide an apparatus that balances simplicity of design and efficiency of homogenization.

Due to a low number of parts, the apparatus may be very cost-efficient to manufacture. Moreover, the parts of the apparatus may be arranged close to each other, thus enabling a compact design.

Whereas in the state of the art as presented above there has been a longstanding technical prejudice that adequate homogenization may only be achieved efficiently using a plurality of optical elements, it is a basic idea of the invention to replace a complex arrangement of a plurality of optical parts and to employ the light pipe as primary means of homogenization.

In general, it can be expected that the homogenization effect of the light pipe may be better the smaller its aperture is, because the number of total internal reflections along the light pipe may increase the smaller its aperture is. A diffuser, for example upstream to the light pipe, may further improve the light pipe performance by means of increasing the total internal reflections.

In case the light pipe comprises a casing, e. g. a tube, wherein a light-guiding rod is arranged, the length of the light pipe may refer to the length of the light-guiding rod, instead of the length of the tube.

However, own experiments have shown that apertures may not be minimized endlessly, as losses, e.g. light not coupled into the light pipe, increase. In particular, a size of a focused spot of the light to be coupled into the light pipe should be smaller than the light pipe's clear aperture to optimize coupling efficiency. In that way, coupling efficiencies of up to nearly 100% may be achieved.

Moreover, thin light pipes are fragile. They may not withstand harsh environments often found in entertainment applications.

Therefore, the invention provides a light pipe for a high-power application which length is at least ten times its aperture. It is possible to select an aperture according to certain requirements of the entertainment application envisaged. The aperture may be chosen such that a required percentage of light may be coupled into the light pipe and that coupling losses remain below an acceptable level. It may also be chosen to ascertain sufficient rigidity of the light pipe. Likewise, the aperture may be adapted to the expected optical power or the rated input power, e. g. 100 W, and / or to other thermal aspects of the apparatus. Other criteria may also be applied for the choice of the aperture.

The length of the light pipe may then be chosen to be at least ten times its aperture. This may yield to a level of homogeneity which may be acceptable for entertainment applications. The experiments have shown that a particularly favorable level of homogeneity may be attained if the length of the light pipe is at least 25 times its aperture.

If the relative length of the light pipe is increased further, it may become increasingly fragile, so that additional measures to protect the light pipe, like additional supports or the like, may be taken into consideration.

For the purposes of this description of the invention, a plurality of optically directly or indirectly connected light pipes may be considered as one (combined) light pipe, i.e., the total length of the plurality of optically connected light pipes may be considered as the length of the light pipe as used in the present context.

However, to minimize losses due to multiple coupling from and to consecutive light pipes, it is preferable if the light pipe or, at least, its light-guiding element, e. g. a hexagonal rod, is monolithic.

To achieve a good light transmittance with no lensing effect, the light pipe may comprise a homogenizing rod having a polygonal cross section with at least six edges, so that the light may be reflected due to total internal reflection (in the following: TIR) over internal flat surfaces. The light pipe may, for example, be a hexagonal or an octagonal light pipe, which avoids lensing effects on the TIR that could be not desirable. The rod may be made from a rigid and transparent material, e.g. glass like N-BK7 glass or, preferably, fused silica due its better thermal properties.

As a result of experiments, a small and thus compact design and favorable homogenization of the apparatus, with the light pipe being sufficiently rigid, may be achieved if the light pipe has an aperture of at least 1.5 mm. In particularly favorable embodiments of the invention, the light pipe has an aperture of at least 2.0 mm, e.g. 3 mm, 4 mm or 5 mm. Its aperture may be less or equal to 10 mm, so that its length may stay below approximately 10 cm, so that the light pipe's cost of manufacture remains low, and the design of the apparatus may remain compact.

A particularly favorable light pipe balancing size and stability and providing very good homogenization adapted to entertainment applications, in particular for rated input powers of 100 W or more, may have an aperture of 2 mm and a length of 5 cm. Furthermore, it is preferable to use one single light pipe of 2 mm x 50 mm size to avoid coupling losses for coupling light between two adjacent light pipes when using a plurality of small light pipes.

The light pipe may be arranged in a tube. The tube may be made of metal, in particular aluminum, to withstand high temperatures and to provide rigid housing. The light pipe may be arranged rotatably in the tube, so that its orientation may be optimized or readjusted after installation.

The light pipe may be clamped by at least one clamp, preferably by at least two clamps. The clamps may be made of metal to improve heat-resistance. In particular, the clamps may be made of aluminum. They may have a slit and a center hole for clamping the light pipe.

A plano-convex lens may be arranged between the light source and the light pipe for focusing and coupling of light into the light pipe.

The diffuser may be a holographic diffuser. The holographic diffuser may be slim and provide high performance. It may exhibit a surface formed to provide a given exit angle and preferably exceed a given transmittance such as 97 percent.

A final, additional homogenization may be provided by a holographic diffuser at an output window of the apparatus.

To further minimize losses, the apparatus may comprise a collimating aspheric lens positioned to receive the light output from the light pipe. The lens position can be slightly varied several millimeters backwards and forwards in combination with a relay lens to change the output beam properties, thus, decreasing the spot size while increasing the beam angle and vice-versa.

Therefore, it is advantageous, if the apparatus also comprises an achromatic relay lens. The achromatic relay lens may be positioned downstream of the collimating aspheric lens. The lens position can be slightly varied several millimeters backwards and forwards in combination with the collimating aspheric lens to change the output beam properties, thus, decreasing spot size while increasing the beam angle and vice-versa.

The light pipe and the first collimating aspheric lens may be fixed to the same support. Other parts of the apparatus may also be fixed to the same support. The light pipe may be fixed directly to the support. Alternatively, or additionally, it may be fixed indirectly to the support. For example, the tube may be fixed to the support, and the light pipe may be fixed to the tube. The light pipe and the other parts fixed to the same support thus may be kept precisely in the same positions relative to one another. The achromatic relay lens may also be fixed to the same support. One or more of the parts may be glued to the support by an adhesive for a cost-efficient and long-lasting fixation.

The light source may be a multi-colour light source. It may comprise a red light emitter chip array, a blue light emitter chip array, and a green light emitter chip array.

Generally speaking, the light source may be configured to blend multiple wavelengths to provide color mixing within the output of the light engine.

To further improve homogenization, additional holographic diffusers could be added into the beam path, for example, at the light pipe output and before a collimating lens, or even as doublet at a same position.

Further features and advantages of the invention result from the following detailed brief description of the drawings, the description of embodiments of the invention and the figures in the drawings, which show details of the invention, and from the claims.

The individual features can be realized individually or in combinations in various embodiments of the invention.

### Brief Description of Drawings

Fig. 1 shows a schematic perspective view of a laser beam homogenizer apparatus,
fig. 2 shows another perspective view of the apparatus of fig. 1,
fig. 3 shows a top view of the apparatus of fig. 1,
fig. 4 shows a side view of the apparatus of fig. 1,
fig. 5 shows another side view of the apparatus of fig. 1, and
fig. 6 shows a perspective view of an area V of fig. 5.

### Description of Embodiments

To facilitate the understanding of the invention, the same reference signs are used for equal or similar parts throughout the following description.

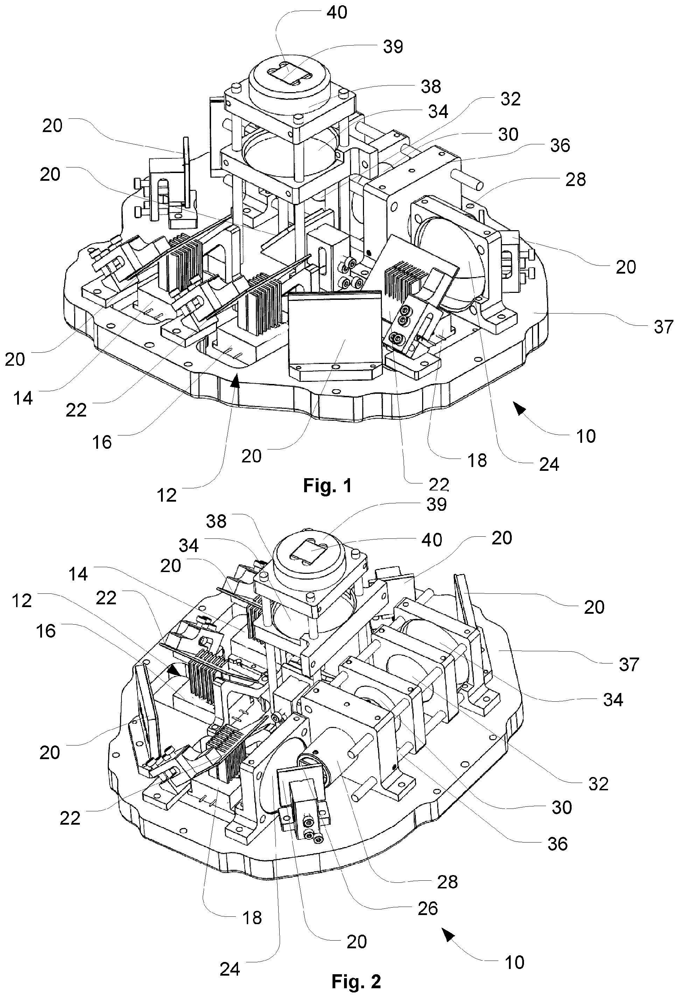

Fig. 1 shows a perspective view of a laser beam homogenizer apparatus 10. Figures 2, 3, 4 and 5 show further views of the apparatus 10.

Apparatus 10 is configured to generate a homogenized light beam. It has a rated input power of 100 W.

The apparatus 10 comprises a light source 12. The light source 12 has three light emitters, a blue light emitter 14, a green light emitter 16, and a red light emitter 18.

Each light emitter 14, 16, 18 comprises a multi-die package (MDP) composed of packaged diode lasers and a corresponding short focal collimation lens array.

In this example, the light sources are based on MDPs. It is noted that alternative embodiments may apply a different kind of packaged laser array source, single TO-CAN laser diodes, optically pumped or other semiconductor laser, solid-state pumped laser, gas laser, laser banks, or even non-coherent light such as laser-pumped phosphor variants or light emitting diodes.

Light beams from the lasers 14, 16, 18 are guided and combined into one combined beam by two mirrors 20 and two dichroic filters 22.

Further downstream is a coupling lens 24 for focusing and coupling the combined light beam into a diffuser 26, which acts as a front to the light pipe 28. The coupling lens 24 is an aspheric lens.

The output of the light pipe 28 passes an aspheric lens 30, an achromatic relay lens 32 and a plano-convex spheric lens 34.

The light pipe 28, the aspheric lens 30, the relay lens 32, and the panel-convex spheric lens 34 are mounted on the same support 36. The support 36 is rigidly fixed to a base 37. All other parts of the apparatus 10 may also directly or indirectly be mounted to the base 37. Such support 36 allows varying the distance for both lenses 30, 32 along the beam path to adjust the output beam properties to the desired beam size and / or angle. Once lenses (30,32) are set at the preferred position, they can be fixed by means of pressing screws and / or glued with an adhesive.

In order to reduce the volume of the apparatus 10 and to provide an even more compact design, the beam path is then turned about 180° by two mirrors 20.

As can be seen, for example, in fig. 1, further downstream a further mirror 20 directs the optical pathway into a vertical direction, passing a second plano-convex spherical lens 34 and a condenser lens 38.

Finally, the optical pathway, or the combined beam, passes an output window 39 comprising a holographic diffuser 40 and exits the apparatus 10.

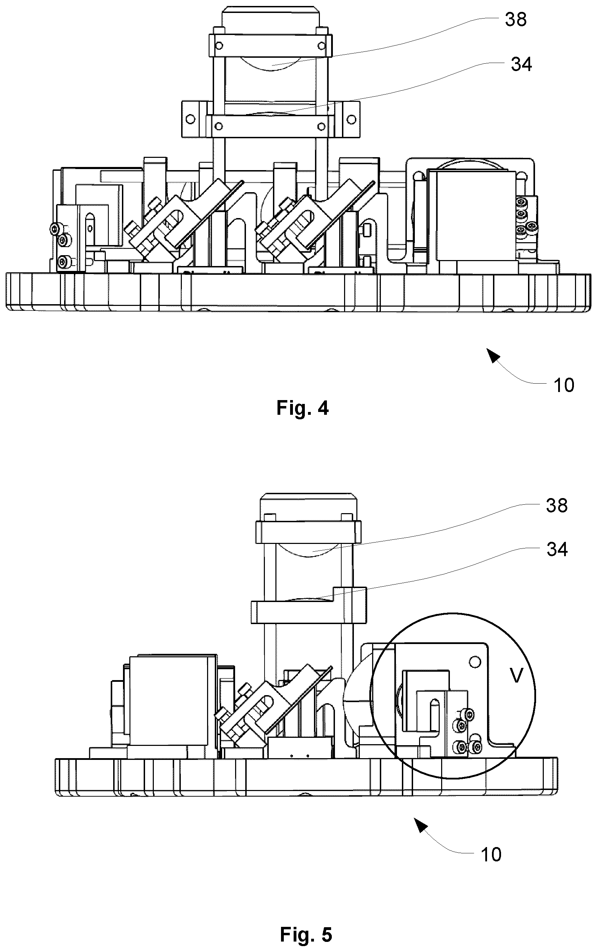

Figures 4 and 5 show the vertical arrangement of the plano-convex spheric lens 34 and the condenser lens 38 in more detail.

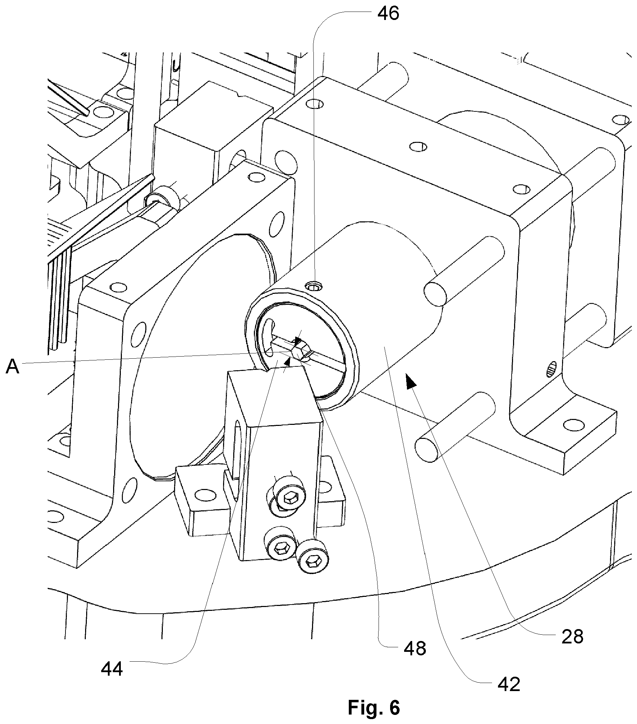

Fig. 6 shows a detailed perspective view of an area V of fig. 5.

The light pipe 28 comprises a tube 42. The tube 42 is made of aluminum. A clamp 44 is arranged in the tube 42. The clamp 44 may be arranged rotatably within the tube 42 during installation. Its position relative to the tube 42 may be fixed by a screw 46. The clamp 44 fixes a hexagonal rod 48 in its center.

The hexagonal rod 48 is made of N-BK7 glass or, preferably, of fused silica. It may have a broadband anti-reflective coating at its face sides to reduce reflection losses on the beam entry as much as possible.

The coupling lens 24 and the diffuser 26 are arranged such that the combined light beam is focused on the face side of the hexagonal rod 48, thus optimizing the coupling of the light beam into the hexagonal rod 48 of the light pipe 28.

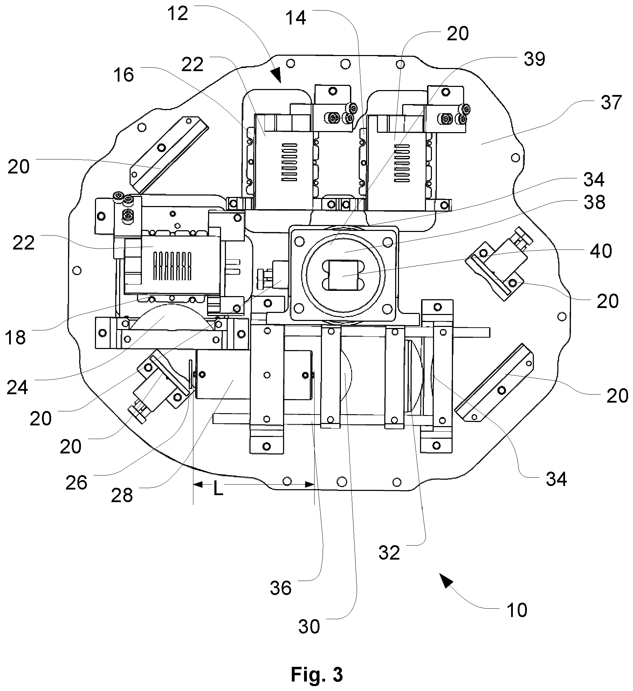

An aperture A of the hexagonal rod 48 of the light pipe 28, which in the present context may be considered as the aperture of the light pipe 28, is 2 mm. A length L, may be 50 mm, as can be seen in fig. 3.
The apparatus may also comprise a cooling subsystem. For efficient cooling, the subsystem may be based on a heat pipe cooler and copper heat pipes embedded in the heatsink and / or based on active coolers, e. g. comprising thermoelectric elements.

### Reference signs list

- 10: Laser beam homogenizer apparatus
- 12: Light source
- 14: Blue light emitter
- 16: Green light emitter
- 18: Red light emitter
- 20: Mirror
- 22: Dichroic filter
- 24: Coupling lens
- 26: Diffuser
- 28: Light pipe
- 30: Collimating lens
- 32: Relay lens
- 34: Plano-convex spherical lens
- 36: Support
- 37: Base
- 38: Condenser lens
- 39: Output window
- 40: Diffuser
- 42: Tube
- 44: Clamp
- 46: Screw
- 48: (Hexagonal) rod
- L: Length (L)
- A: Aperture (A)

## Claims

1. A laser beam homogenizer apparatus (10) for high power lighting entertainment applications of at least 100 W rated input power comprising:
a light source (12), a light pipe (28) for receiving and homogenizing light from the light source (12), and a focusing lens (24) for coupling the light into the light pipe (28), wherein the length (L) of the light pipe (28) is at least 10, preferably at least 25, times its aperture (A).

2. The apparatus according to claim 1, wherein the light pipe (28) is a homogenizing rod (48) having a polygonal cross section with at least six edges, e.g. a hexagonal light pipe.

3. The apparatus according to any preceding claim, wherein the light pipe (28) has an aperture (A) of at least 1.5 mm, in particular at least 2.0 mm.

4. The apparatus according to any preceding claim, wherein the light pipe (28) is arranged in a tube (42).

5. The apparatus according to any preceding claim, wherein the light pipe (28) is clamped by at least one clamp (44), preferably by at least two clamps (44).

6. The apparatus according to any preceding claim, wherein the light pipe (28) is arranged rotatably in the tube (42).

7. The apparatus according to any preceding claim, further comprising a plano-convex lens (34) between the light source (12) and the light pipe (28).

8. The apparatus according to any preceding claim, wherein the diffuser (26) is a holographic diffuser (26).

9. The apparatus according to any preceding claim, further comprising a holographic diffuser (26) at an output window (39) of the apparatus (10).

10. The apparatus according to any preceding claim, further comprising a first collimating lens (30) positioned to receive light output from the light pipe (28).

11. The apparatus according to any preceding claim, further comprising an achromatic relay lens (32).

12. The apparatus according to any preceding claim, wherein the light pipe (28) and the collimating lens (30) are fixed to the same support (36).

13. The apparatus according to any preceding claim, wherein the light source (12) comprises a red light emitter, a blue light emitter, and a green light emitter.

14. The apparatus according to any preceding claim, wherein the light source (12) is configured to blend multiple wavelengths to provide a color-mixed output of the apparatus (10).
